# EUROPÄISCHE PATENTSCHRIFT

(11) **EP 3 003 648 B1**
(45) Veröffentlichungstag und Bekanntmachung des Hinweises auf die Patenterteilung: **06.12.2017**
(21) Anmeldenummer: 14727539.0
(22) Anmeldetag: 03.06.2014
(51) Int. Cl.: B25F 5/00

(54) **HANDWERKZEUGMASCHINE MIT EINEM SCHALTBAREN GETRIEBE**
HAND-HELD POWER TOOL HAVING A SHIFTABLE GEAR TRAIN
MACHINE-OUTIL PORTATIVE ÉQUIPÉE D'UNE TRANSMISSION DÉBRAYABLE

(30) Priorität: 03.06.2013 DE 102013210222; 02.06.2014 DE 102014210343
(43) Veröffentlichungstag der Anmeldung: 13.04.2016
(60) Teilanmeldung: 17198868.6
(73) Patentinhaber: Robert Bosch GmbH, 70442 Stuttgart (DE)
(72) Erfinder: BRENNENSTUHL, Jens, 73095 Albershausen (DE); ROEHM, Heiko, 70176 Stuttgart (DE); HEBER, Andreas, 73266 Bissingen An Der Teck (DE)
(86) Internationale Anmeldenummer: PCT/EP2014/061422
(87) Internationale Veröffentlichungsnummer: WO 2014/195278

(56) Entgegenhaltungen:
- EP-A1- 2 206 572
- WO-A1-2011/085871
- DE-A1-102008 042 033
- DE-A1-102009 060 929
- US-A1- 2011 079 408

## Beschreibung

### Stand der Technik

Die vorliegende Erfindung betrifft eine Handwerkzeugmaschine mit einem schaltbaren Getriebe zum Antrieb einer Antriebswelle, das in einem Getriebegehäuse angeordnet ist und über ein Schaltglied mindestens zwischen einem ersten Gang und einem zweiten Gang umschaltbar ist. Aus dem Stand der Technik sind derartige Handwerkzeugmaschinen zum Beispiel aus WO 2011/085871, DE 102009060929, DE 102008042033 oder EP 2206572 bekannt, die ein schaltbares Getriebe zum Antrieb einer Antriebswelle aufweisen, wobei das Getriebe nach Art eines Untersetzungsgetriebes ausgebildet ist, mit dem eine vorgegebene Motordrehzahl in einen für eine jeweilige Anwendung erforderlichen Drehzahlbereich der Antriebswelle untersetzt werden kann. Beispielsweise werden bei Akku-Schraubern, Akku-Bohrschraubern und/oder Akku-Schlagbohrmaschinen Motordrehzahlen von etwa 20.000 U/min in einen Drehzahlbereich von etwa 150 bis 2.000 U/min untersetzt.

Die Untersetzungsgetriebe werden z. B. als mehrstufige Planetengetriebe mit mindestens zwei Gängen ausgeführt, sodass ein Benutzer einer derartigen Handwerkzeugmaschine diese beispielsweise zwischen einem ersten und einem zweiten Gang umschalten kann, wobei z. B. der erste Gang ein vergleichsweise langsamer Gang mit hohem Drehmoment und der zweite Gang ein vergleichsweise schneller Gang mit niedrigem Drehmoment ist. Zur Realisierung der Gänge weist ein entsprechendes Planetengetriebe gebräuchlicherweise drei Planetenstufen auf, von denen zur Gangumschaltung jeweils mindestens eine der drei Stufen über ein Schalthohlrad deaktivierbar ist, das über ein manuell betätigbares Betätigungselement verschiebbar ist. Als Betätigungselement wird ein über ein zugeordnetes Schiebeelement betätigbarer Federdraht verwendet, der mit dem verschiebbaren Schalthohlrad verbunden ist. Dieser Federdraht kann entweder über einen Fixpunkt geschwenkt oder linear verschoben werden.

Nachteilig am Stand der Technik ist, dass ein Schiebeelement vergleichsweise schwer bedienbar ist, insbesondere wenn ein entsprechender Benutzer Arbeitshandschuhe trägt, und deshalb unkomfortabel in seiner Handhabung ist. Darüber hinaus kann das Schalthohlrad bei einer unsachgemäßen bzw. nicht ausreichenden Verschiebung des Schiebeelements in eine Zwischenposition verschoben werden, die im Betrieb der Handwerkzeugmaschine zu einer Beschädigung des Planetengetriebes führen kann.

### Offenbarung der Erfindung

Eine Aufgabe der Erfindung ist es daher, eine neue Handwerkzeugmaschine mit einem zumindest zwischen einem ersten und einem zweiten Gang umschaltbaren Getriebe bereitzustellen, bei dem eine leichtgängige, komfortable und sichere Gangumschaltung zwischen den einzelnen Gängen möglich ist.

Dieses Problem wird gelöst durch eine Handwerkzeugmaschine mit einem schaltbaren Getriebe zum Antrieb einer Antriebswelle, das in einem Getriebegehäuse angeordnet ist und über ein Schaltglied mindestens zwischen einem ersten Gang und einem zweiten Gang umschaltbar ist. Dem Schaltglied ist ein, insbesondere im Getriebegehäuse, schwenkbar gelagertes Betätigungselement zugeordnet, das als bistabiles Federelement ausgebildet ist und zumindest abschnittsweise im Bereich zwischen dem Schaltglied und dem Getriebegehäuse angeordnet ist. Das bistabile Federelement ist zur Gangumschaltung betätigbar und nimmt in mindestens einer Schaltposition des Schaltglieds, die dem ersten oder zweiten Gang zugeordnet ist, eine stabile Schaltlage ein, und nimmt in einer Zwischenposition des Schaltglieds, die zwischen dem ersten und zweiten Gang zugeordneten Schaltpositionen des Schaltglieds angeordnet ist, eine instabile Lage ein, wobei ein nach Art eines Lagerblechs ausgebildetes Lagerelement zur schwenkbaren Lagerung des bistabilen Federelements im Getriebegehäuse angeordnet ist und wobei das Lagerelement einen ringförmigen Träger aufweist. Die Erfindung ermöglicht somit die Bereitstellung einer Handwerkzeugmaschine, bei der durch die Verwendung eines bistabilen Federelements als Betätigungselement eine einfache, leichtgängige und komfortable Gangumschaltung zwischen erstem und zweitem Gang ermöglicht wird. Hierbei gewährleistet das bistabile Federelement, dass ein entsprechender Umschaltvorgang bei reduzierter

Umschaltkraft jeweils vollständig und korrekt ausgeführt wird, sodass eine sichere und zuverlässige Gangumschaltung ermöglicht wird, wobei eine jeweilige Schaltlage des bistabilen Federelements mit einer zugeordneten Schaltposition des Schaltglieds gekoppelt ist. Darüber hinaus kann durch eine Anordnung des bistabilen Federelements im Bereich zwischen dem Schaltglied und dem Getriebegehäuse ein kompakter, verkürzter Aufbau der Handwerkzeugmaschine mit kurzen Toleranzketten ermöglicht werden, wobei Anzahl und Größe entsprechend erforderlicher Öffnungen am Getriebegehäuse zumindest reduziert werden können und somit ein zumindest weitgehend fettdichtes Getriebegehäuse bereitgestellt werden kann. Insbesondere können durch die Verwendung des bistabilen Federelements vorgegebene Schaltpositionen des Schaltglieds definiert werden und entsprechende Gangumschaltungen beschleunigt und somit zeitlich verkürzt werden.

Gemäß einer Ausführungsform weist das bistabile Federelement einen ringförmigen Grundkörper auf, der im Bereich zwischen dem Schaltglied und dem Getriebegehäuse angeordnet ist.

Somit kann die Bereitstellung eines robusten und stabilen bistabilen Federelements ermöglicht werden.

Bevorzugt weist das bistabile Federelement mindestens zwei radial einwärts gerichtete Mitnehmerzungen auf, die mit dem Schaltglied gekoppelt sind und dazu ausgebildet sind, bei einer Betätigung des bistabilen Federelements zur Gangumschaltung das Schaltglied in eine jeweils dem ersten oder zweiten Gang zugeordnete Schaltposition zu verfahren.

Somit kann eine sichere und zuverlässige Mitnahme bzw. Verschiebung des Schaltglieds durch das bistabile Federelement bei einer Gangumschaltung gewährleistet werden.

Gemäß einer Ausführungsform weist das bistabile Federelement mindestens zwei radial auswärts gerichtete Ansteuerzungen auf, die dazu ausgebildet sind, eine Betätigung des bistabilen Federelements zur Gangumschaltung über mindestens ein erstes oder ein zweites Umschaltelement zu ermöglichen. In einer alternativen Ausführungsform weist das bistabile Federelement mindestens vier radial auswärts gerichtete Ansteuerzungen auf, die dazu ausgebildet sind, eine Betätigung des bistabilen Federelements zur Gangumschaltung über mindestens ein erstes oder ein zweites Umschaltelement zu ermöglichen
Die Erfindung ermöglicht somit die Bereitstellung einer Handwerkzeugmaschine, die auf einfache Art und Weise eine Verwendung von mehr als einem Umschaltelement zur Gangumschaltung ermöglicht. Somit kann z. B. für jede Hand eines Benutzers der Handwerkzeugmaschine ein geeignetes Umschaltelement zur Gangumschaltung zur Verfügung gestellt werden, um dem Benutzer eine komfortable und benutzerfreundliche Gangumschaltung zu ermöglichen. Darüber hinaus können durch die Verwendung des bistabilen Federelements vorgegebene Schaltstellungen für die Umschaltelemente definiert werden.

Das erste Umschaltelement ist bevorzugt dazu vorgesehen, eine Gasgebefunktion auszubilden, und das zweite Umschaltelement ist bevorzugt dazu vorgesehen, eine Gangumschaltfunktion auszubilden.

Somit können unterschiedliche Bedienschalter an der Handwerkzeugmaschine zur Gangumschaltung Anwendung finden.
In einer alternativen Ausgestaltung weist das bistabile Federelement mindestens eine radial auswärts gerichtete Ansteuerzunge auf, die dazu ausgebildet ist, eine Betätigung des bistabilen Federelements zur Gangumschaltung über mindestens ein Umschaltelement zu ermöglichen, wobei das Umschaltelement als Gangwahlschaltelement ausgebildet ist. In einer weiteren alternativen Ausgestaltung weist das bistabile Federelement mindestens zwei radial auswärts gerichtete Ansteuerzunge auf, die dazu ausgebildet sind, eine Betätigung des bistabilen Federelements zur Gangumschaltung über mindestens ein Umschaltelement zu ermöglichen, wobei das Umschaltelement als Gangwahlschaltelement ausgebildet ist.

In einer alternativen Ausführungsform weist das bistabile Federelement mindestens eine radial auswärts gerichtete Ansteuerzunge auf, die dazu ausgebildet ist, eine Betätigung des bistabilen Federelements zur Gangumschaltung über mindestens ein Umschaltelement zu ermöglichen, wobei das Umschaltelement als Handschalter ausgebildet ist. Alternativ hierzu kann das bistabile Federelement auch mindestens zwei radial auswärts gerichtete Ansteuerzunge aufweisen, die dazu ausgebildet sind, eine Betätigung des bistabilen Federelements zur Gangumschaltung über mindestens ein Umschaltelement zu ermöglichen, wobei das Umschaltelement als Handschalter ausgebildet ist.

Gemäß einer Ausführungsform ist das bistabile Federelement an mindestens zwei Körperkanten schwenkbar im Getriebegehäuse gelagert.

Die Erfindung ermöglicht somit die Bereitstellung einer Handwerkzeugmaschine, bei der ein bistabiles Federelement zur Gangumschaltung bauraumsparend in der Handwerkzeugmaschine angeordnet werden kann. Darüber hinaus kann eine Synchronisierung der zur Gangumschaltung verwendeten Bauteile auf einfache Art und Weise ohne spezifisch hierfür vorgesehene Bauteile erfolgen.

Bevorzugt sind die mindestens zwei Körperkanten als radiale Erweiterungen am ringförmigen Grundkörper des bistabilen Federelements ausgebildet.

Somit kann ein unkompliziertes und betriebssicheres bistabiles Federelement bereitgestellt werden. Durch das nach Art eines Lagerblechs ausgebildete Lagerelement zur schwenkbaren Lagerung des bistabilen Federelements im Getriebegehäuse kann eine stabile und zuverlässige Lagerung des bistabilen Federelements im Getriebegehäuse ermöglicht werden.

An dem Lagerelement sind bevorzugt mindestens zwei axiale Lagerarme zur schwenkbaren Lagerung des bistabilen Federelements ausgebildet.

Somit kann ein einfaches und kostengünstiges Lagerelement zur schwenkbaren Lagerung des bistabilen Federelements bereitgestellt werden.

Gemäß einer Ausführungsform ist das schaltbare Getriebe nach Art eines Planetengetriebes mit mindestens einer Planetenstufe ausgebildet, wobei das Schaltglied nach Art eines Schalthohlrads ausgebildet ist. Das Planetengetriebe kann auch mit zwei, drei oder mehr Planetenstufen ausgebildet sein.

Somit kann ein robustes und betriebssicheres Getriebe bei einer Realisierung der Handwerkzeugmaschine Anwendung finden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine teilweise geschnittene, perspektivische Ansicht einer Handwerkzeugmaschine mit einem bistabilen Federelement zur Gangumschaltung gemäß einer Ausführungsform,
Fig. 2 eine vergrößerte perspektivische Ansicht eines Ausschnitts der Handwerkzeugmaschine von Fig. 1,
Fig. 3 eine Schnittansicht eines Teils des Ausschnitts von Fig. 2,
Fig. 4 eine Draufsicht auf das bistabile Federelement von Fig. 1 bis 3, und
Fig. 5 eine perspektivische Ansicht eines Teils des Ausschnitts von Fig. 2, gesehen aus einem im Vergleich zu Fig. 2 veränderten Betrachtungswinkel
Fig. 6 eine Draufsicht auf eine alternative Ausgestaltung des bistabilen Federelements
Fig. 7 eine Draufsicht auf eine weitere alternative Ausgestaltung des bistabilen Federelements
Fig. 8 eine zu Fig. 3 analoge Schnittansicht mit dem bistabilen Federelement nach Fig. 6
Fig. 9 eine zu Fig. 3 analoge Schnittansicht mit dem bistabilen Federelement nach Fig. 7
Fig. 10 eine Draufsicht auf eine weitere alternative Ausgestaltung des bistabilen Federelements
Fig. 11 eine Draufsicht auf eine weitere alternative Ausgestaltung des bistabilen Federelements
Fig. 12 eine Draufsicht auf eine weitere alternative Ausgestaltung des bistabilen Federelements
Fig. 13 einen Ausschnitt der Handwerkzeugmaschine von Fig. 1 mit der Antriebswelle und dem von einem zugeordneten Antriebsmotor angetriebenen Planetengetriebe, das hier beispielhaft gemäß einer alternativen Ausführungsform ausgebildet ist
Fig. 14 eine perspektivische Draufsicht auf einen Gehäuseabschnitt des Getriebegehäuses des Planetengetriebes von Fig. 13
Fig. 15 einen Längsschnitt durch den Gehäuseabschnitt des Getriebegehäuses von Fig. 14
Fig. 16 eine Draufsicht auf das als Handschalter ausgebildete erste Umschaltelement in einer weiterführenden Ausgestaltung.

### Beschreibung der Ausführungsbeispiele

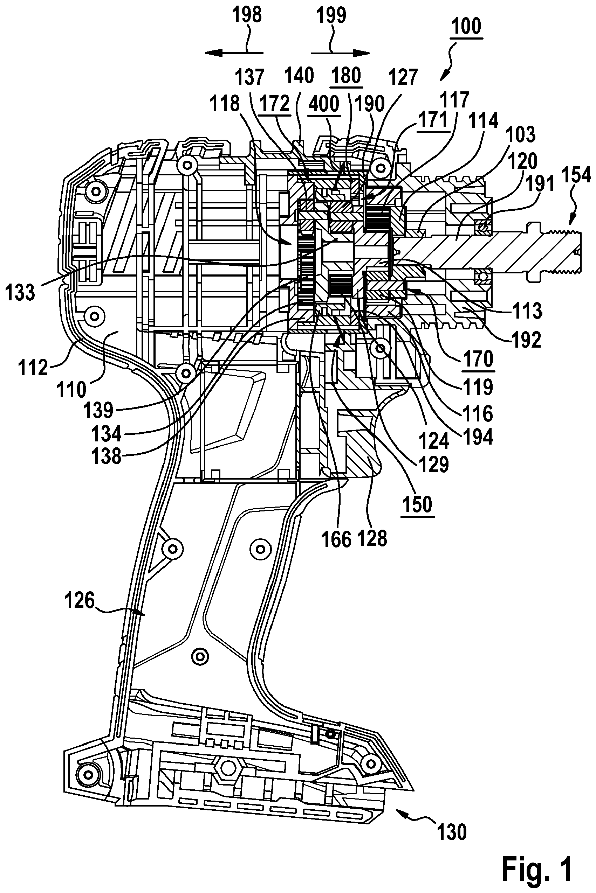

Fig. 1 zeigt eine beispielhafte Handwerkzeugmaschine 100, die zumindest in einem ersten und einem zweiten Gang betreibbar ist und ein Werkzeuggehäuse 110 mit einem Handgriff 126 aufweist. Das Werkzeuggehäuse 110 ist beispielhaft zweiteilig mit zwei aneinander befestigten Gehäuseschalen ausgebildet, von denen hier lediglich eine - in Fig. 1 hintere - Gehäuseschale 112 gezeigt ist.

Die Handwerkzeugmaschine 100 ist bevorzugt zur netzunabhängigen Stromversorgung an einer Schnittstelle 130 mechanisch und elektrisch mit einem Akkupack verbindbar. In Fig. 1 ist die Handwerkzeugmaschine 100 beispielhaft als Akku-Schrauber ausgebildet. Es wird jedoch darauf hingewiesen, dass die vorliegende Erfindung nicht auf Akku-Schrauber beschränkt ist, sondern vielmehr bei unterschiedlichen Handwerkzeugmaschinen Anwendung finden kann, die zumindest in einem ersten und einem zweiten Gang betreibbar sind, unabhängig davon, ob die Handwerkzeugmaschine netzabhängig oder netzunabhängig mit einem Akkupack betreibbar ist, z. B. bei einem Bohrschrauber oder Akku-Bohrschrauber, einem Schlagschrauber oder Akku-Schlagschrauber einer Schlagbohrmaschine oder Akku-Schlagbohrmaschine usw.

Gemäß einer Ausführungsform ist in dem Werkzeuggehäuse 110 ein schaltbares Getriebe 118 zum Antrieb einer Antriebswelle 120, z. B. einer Antriebsspindel, angeordnet, die beispielhaft über mindestens ein Wälzlager 191 drehbeweglich am Werkzeuggehäuse 110 gelagert ist. Das schaltbare Getriebe 118 ist illustrativ in einem Getriebegehäuse 190 angeordnet, das seinerseits in dem Werkzeuggehäuse 110 angeordnet ist. Das Getriebe 118 wird von einem zugeordneten Antriebsmotor angetrieben, der z. B. über einen Handschalter 128 betätigbar, d. h. ein- und ausschaltbar ist, und ein beliebiger Motortyp sein kann, z. B. ein elektronisch kommutierter Motor oder ein Gleichstrommotor, wobei der Antriebsmotor vorzugsweise derart elektronisch steuer- bzw. regelbar ist, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass in Fig. 1 zwecks Einfachheit der Zeichnung auf eine Darstellung des Antriebsmotors verzichtet wird und hier zwecks Knappheit der Beschreibung auf eine eingehende Beschreibung des Antriebsmotors verzichtet wird.

Dem schaltbaren Getriebe 118 ist eine Werkzeugaufnahme zugeordnet, die z. B. einen Bithalter oder ein Spannfutter aufweisen kann, die an einer Befestigungsschnittstelle 154 der Antriebswelle 120 befestigbar sind. Darüber hinaus kann dem schaltbaren Getriebe 118 eine optionale Drehmomentkupplung zugeordnet sein. Es wird jedoch darauf hingewiesen, dass die Funktionsweise und der Aufbau einer geeigneten Werkzeugaufnahme sowie einer geeigneten Drehmomentkupplung aus dem Stand der Technik hinreichend bekannt sind, sodass in Fig. 1 zwecks Einfachheit der Zeichnung auf deren Darstellung verzichtet wird und hier zwecks Knappheit der Beschreibung ebenfalls auf eine eingehende Beschreibung hiervon verzichtet wird.

Bevorzugt ist das schaltbare Getriebe 118 über ein Schaltglied 166 mindestens zwischen einem ersten Gang und einem zweiten Gang umschaltbar. Der erste Gang ist z. B. ein vergleichsweise langsamer Gang mit hohem Drehmoment und der zweite Gang ein vergleichsweise schneller Gang mit niedrigem Drehmoment. Hierzu ist dem Schaltglied 166 ein im Getriebegehäuse 190 schwenkbar gelagertes Betätigungselement 150 zugeordnet, das gemäß einer Ausführungsform als bistabiles Federelement 400 ausgebildet ist und zumindest abschnittsweise im Bereich zwischen dem Schaltglied 166 und dem Getriebegehäuse 190 angeordnet ist.

Das bistabile Federelement 400 ist zumindest zur Gangumschaltung betätigbar und nimmt bevorzugt in mindestens einer Schaltposition des Schaltglieds 166, die dem ersten oder zweiten Gang zugeordnet ist, eine stabile Schaltlage ein. Das bistabile Federelement 400 nimmt insbesondere in beiden Schaltpositionen des Schaltglieds 166, die dem ersten oder zweiten Gang zugeordnet sind, eine stabile Schaltlage ein. In einer Zwischenposition des Schaltglieds 166, d. h. in einer Position, die zwischen denjenigen Schaltpositionen des Schaltglieds 166 angeordnet ist, die dem ersten und zweiten Gang zugeordnet sind, nimmt das bistabile Federelement 400 bevorzugt eine instabile Lage ein.

Bevorzugt ist das bistabile Federelement 400 zur Gangumschaltung des schaltbaren Getriebes 118 über mindestens ein und illustrativ zwei Umschaltelemente 128, 140 ausgebildet. Das bistabile Federelement 400 kann demnach über das erste Umschaltelement 128 oder über das zweite Umschaltelement 140 oder über das erste Umschaltelement 128 und das zweite Umschaltelement 140 zur Gangumschaltung des schaltbaren Getriebes 118 ausgebildet sein. Das erste Umschaltelement 128 ist z. B. der Handschalter 128 der Handwerkzeugmaschine 100, der bevorzugt sowohl zum Ein- und Ausschalten der Handwerkzeugmaschine 100, als auch zur Realisierung einer Gasgebefunktion ausgebildet ist. Der Handschalter 128 ist insbesondere ein Ein/Ausschalter und/oder Gasgebeschalter. Das zweite Umschaltelement 140 ist beispielhaft nach Art eines separaten Schiebeschalters am Werkzeuggehäuse 110 gelagert und zumindest zur Realisierung einer Gangumschaltfunktion ausgebildet. Zumindest der Schiebeschalter 140 kann optional in zugeordneten Schaltstellungen am Werkzeuggehäuse 110 verrastbar sein.

Gemäß einer Ausführungsform ist das schaltbare Getriebe 118 nach Art eines Untersetzungsgetriebes mit mindestens einer schaltbaren Getriebestufe ausgebildet. Illustrativ ist das schaltbare Getriebe 118 nach Art eines Planetengetriebes mit drei in dem Getriebegehäuse 190 angeordneten Planetenstufen ausgebildet: einer vorderen Stufe 170, einer mittleren Stufe 171 und einer hinteren Stufe 172. Deshalb wird das schaltbare Getriebe 118 nachfolgend zur Vereinfachung der Beschreibung auch als das "Planetengetriebe" 118 bezeichnet.

Die vordere Planetenstufe 170 wird bevorzugt von einem Halteblech 194 in einem vorderen Gehäuseabschnitt 192 des Getriebegehäuses 190 fixiert und hat beispielhaft ein Sonnenrad 113, mindestens ein erstes und ein zweites Planetenrad 117 und 119, einen Planetenträger 114, sowie ein axial unbeweglich und in Bohrstellung drehfest im Getriebegehäuse 190 angeordnetes Hohlrad 116. Der Planetenträger 114 ist mit einem Antriebsglied 103 der Antriebswelle 120 verbunden, das mit der Antriebswelle 120 z. B. mindestens eine formschlüssige Verbindung ausbildet, wobei das Antriebsglied 103 am Planetenträger 114 auf geeignete Art und Weise befestigt sein kann oder an diesem angeformt bzw. einstückig mit diesem ausgebildet sein kann.

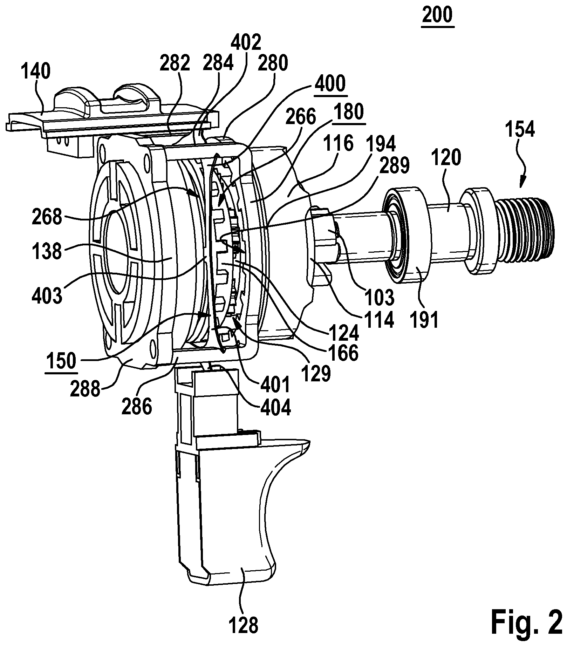

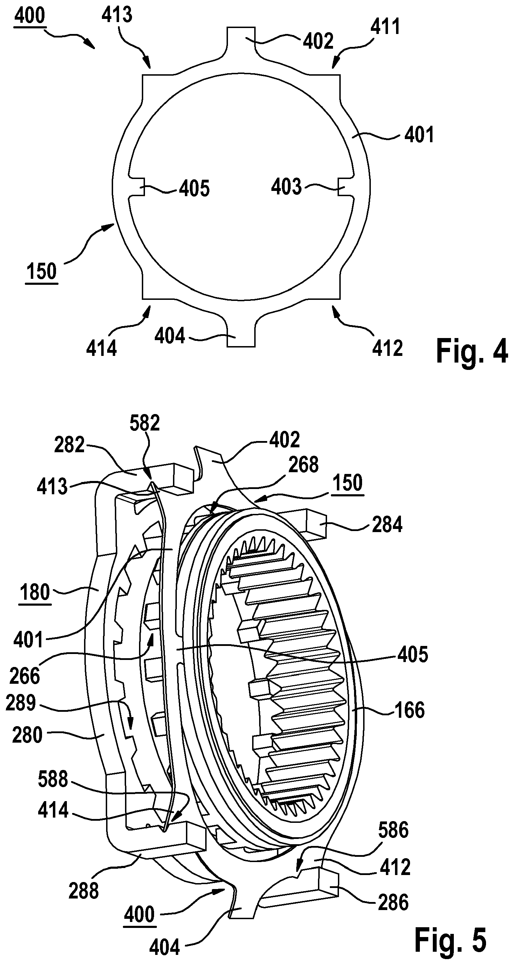

Die mittlere Planetenstufe 171 hat beispielhaft ein Sonnenrad 133, mindestens ein erstes und ein zweites Planetenrad 127 und 129, einen Planetenträger 124, sowie das gemäß einer Ausführungsform nach Art eines einstückigen Schalthohlrads ausgebildete und nachfolgend auch als "Schalthohlrad" bezeichnete Schaltglied 166. Dieses kann alternativ hierzu auch zweistückig bzw. zweiteilig ausgeführt sein und z.B. ein axial unbewegliches, inneres Hohlrad sowie eine axial bewegliche, äußere Schalthülse aufweisen. Der Planetenträger 124 bildet das Sonnenrad 113 der vorderen Planetenstufe 170 aus, wobei das Sonnenrad 113 am Planetenträger 124 auf geeignete Art und Weise befestigt sein kann oder an diesem angeformt bzw. einstückig mit diesem ausgebildet sein kann. Illustrativ ist der Planetenträger 124 zumindest abschnittsweise innerhalb eines nach Art eines Lagerblechs ausgebildeten Lagerelements 180 angeordnet, das drehfest im Getriebegehäuse 190 angeordnet ist. An diesem Lagerelement 180 ist das bistabile Federelement 400 schwenkbar gelagert, wie unten bei Fig. 2 und 5 beschrieben.

Die hintere Planetenstufe 172 hat beispielhaft mindestens ein erstes und ein zweites Planetenrad 137 und 139, einen Planetenträger 134, sowie ein axial unbeweglich und drehfest im Getriebegehäuse 190 angeordnetes Hohlrad 138. Die Planetenräder 137, 139 werden im Betrieb der Handwerkzeugmaschine 100 von einem zwecks Vereinfachung der Zeichnung nicht gezeigten Sonnenrad angetrieben, das z. B. von einem dem Antriebsmotor zugeordneten Ritzel ausgebildet wird. Der Planetenträger 134 bildet das Sonnenrad 133 der mittleren Planetenstufe 171 aus, wobei das Sonnenrad 133 am Planetenträger 134 auf geeignete Art und Weise befestigt sein kann oder an diesem angeformt bzw. einstückig mit diesem ausgebildet sein kann.

Im Betrieb der Handwerkzeugmaschine 100 ist das Schalthohlrad 166 durch eine Betätigung des bistabilen Federelements 400 mittels des ersten oder zweiten Umschaltelements 128, 140 in axialer Richtung des Getriebegehäuses 190 von einer - in Fig. 1 gezeigten - ersten Schaltposition in Richtung eines Pfeils 199 in eine nicht gezeigte zweite Schaltposition verschiebbar. Hierbei ist die erste - in Fig. 1 hintere - Schaltposition z. B. dem zweiten, vergleichsweise schnellen Gang mit niedrigem Drehmoment und die zweite Schaltposition z. B. dem ersten, vergleichsweise langsamen Gang mit hohem Drehmoment des Planetengetriebes 118 zugeordnet. Durch eine umgekehrte Verschiebung des Schalthohlrads 166 von seiner zweiten, vorderen Schaltposition in seine erste, hintere Schaltposition, wie mit einem Pfeil 198 angedeutet, kann das Planetengetriebe 118 dann wieder vom ersten in den zweiten Gang umgeschaltet werden.

In seiner ersten, hinteren Schaltposition ist das Schalthohlrad 166 drehfest mit dem Planetenträger 134 der hinteren Planetenstufe 172 verbunden, sodass dieser Planetenträger 134 und die Planetenräder 127, 129 der mittleren Planetenstufe 171 ebenfalls drehfest miteinander verbunden sind. Hierdurch wird die mittlere Planetenstufe 171 deaktiviert, sodass der zweite Gang aktiviert ist. In seiner zweiten Schaltposition, die einer in Fig. 1 axial vorderen Position des Schalthohlrads 166 entspricht, ist dieses drehfest mit dem Lagerelement 180 und somit dem Getriebegehäuse 190 verbunden, sodass die mittlere Planetenstufe 171 und somit der erste Gang aktiviert sind.

Fig. 2 zeigt eine Anordnung 200 mit dem Planetengetriebe 118, der Antriebswelle 120, dem Handschalter 128 und dem Schiebeschalter 140 von Fig. 1 zur Verdeutlichung einer beispielhaften Ausgestaltung des Schalthohlrads 166, des Lagerelements 180 und des bistabilen Federelements 400 von Fig. 1. In der Anordnung 200 ist das Hohlrad 138 der hinteren Planetenstufe 172 von Fig. 1 beispielhaft zumindest abschnittsweise nach Art eines Abschlussflansches zum motorseitigen Abschluss des Planetengetriebes 118 ausgebildet.

Das Schalthohlrad 166 weist an seinem Außenumfang bevorzugt zumindest eine Ringnut 268 auf. Darüber hinaus ist am Außenumfang des Schalthohlrads bevorzugt zumindest eine erste Blockiergeometrie 266 ausgebildet.

Das Lagerelement 180 weist bevorzugt einen ringförmigen Träger 280 auf, an dem gemäß einer Ausführungsform mindestens zwei und bevorzugt vier axiale Lagerarme 282, 284, 286, 288 vorgesehen sind, die sich ausgehend vom ringförmigen Träger 280 in axialer Richtung mit einer vorgegebenen radialen Beabstandung über das Schalthohlrad 166 hinweg in Richtung des Hohlrads 138 erstrecken. Darüber hinaus ist am ringförmigen Träger 280 bevorzugt eine zweite Blockiergeometrie 289 ausgebildet, in die die am Außenumfang des Schalthohlrads 166 vorgesehene, erste Blockiergeometrie 266 im ersten Gang der Handwerkzeugmaschine 100 eingreift, um das Schalthohlrad 166 drehfest mit dem Lagerelement 180 zu verbinden, wie bei Fig. 1 beschrieben. Die Lagerarme 282, 284, 286, 288 sind bevorzugt zur schwenkbaren Lagerung des bistabilen Federelements 400 ausgebildet, wie unten bei Fig. 5 beschrieben.

Das bistabile Federelement 400 weist gemäß einer Ausführungsform einen ringförmigen Grundkörper 401 auf, der das Schalthohlrad 166 vollständig umgreift und somit im Bereich zwischen dem Schaltglied 166 und dem Getriebegehäuse 190 von Fig. 1 angeordnet ist, wie aus einer Zusammenschau von Fig. 1 und 2 ersichtlich. Der Grundkörper 401 ist beispielhalft als ring- bzw. kreisringförmige Blattfeder ausgebildet. Der Grundkörper 401 kann z.B. von einem Blechstanzteil gebildet sein. Darüber hinaus weist das bistabile Federelement 400 mindestens eine und bevorzugt zwei ausgehend vom ringförmigen Grundkörper 401 radial einwärts gerichtete Mitnehmerzungen 403 (und 405 in Fig. 4) auf. Diese sind mit dem Schalthohlrad 166 gekoppelt und dazu ausgebildet, bei einer Betätigung des bistabilen Federelements 400 zur Gangumschaltung das Schalthohlrad 166 in die dem zweiten Gang zugeordnete erste Schaltposition oder die dem ersten Gang zugeordnete zweite Schaltposition zu verfahren, wie bei Fig. 1 beschrieben. Illustrativ greifen die radial einwärts gerichteten Mitnehmerzungen 403 (und 405 in Fig. 4) in die am Außenumfang des Schalthohlrads 166 vorgesehene Ringnut 268 ein.

Darüber hinaus sind am bistabilen Federelement 400 gemäß einer Ausführungsform mindestens eine und bevorzugt zwei ausgehend vom ringförmigen Grundkörper 401 radial auswärts gerichtete Ansteuerzungen 402, 404 vorgesehen. Diese sind illustrativ zumindest annähernd rechtwinklig zu den Mitnehmerzungen 403 (und 405 in Fig. 4) ausgerichtet und dazu ausgebildet, eine Betätigung des bistabilen Federelements 400 zur Gangumschaltung zumindest über den Handschalter 128 und/oder den Schiebeschalter 140 zu ermöglichen.

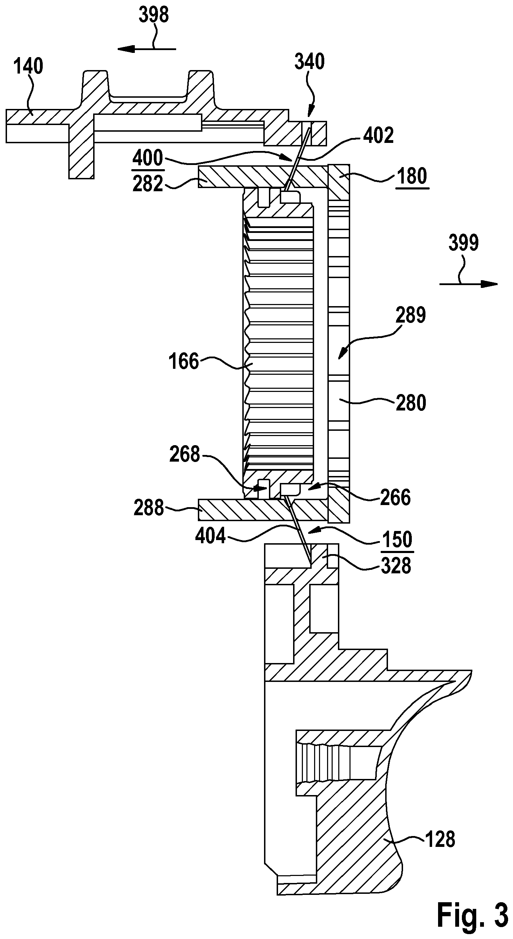

Fig. 3 zeigt den Handschalter 128, den Schiebeschalter 140, das Schalthohlrad 166, das Lagerelement 180 und das bistabile Federelement 400 von Fig. 1 und 2 zur Illustration einer beispielhaften Gangumschaltung vom zweiten in den ersten Gang der Handwerkzeugmaschine 100 von Fig. 1. Hierbei verdeutlicht Fig. 3 eine beispielhafte Fixierung einer ersten Ansteuerzunge 402 des bistabilen Federelements 400 in einer nutförmigen Aufnahme 340 des Schiebeschalters 140, sowie ein beispielhaftes Anliegen einer zweiten Ansteuerzunge 404 des bistabilen Federelements 400 an einem stegförmigen Ansteuerglied 328 des Handschalters 128. Bevorzugt greifen lediglich diese beiden Ansteuerzungen 402, 404 nach radial auswärts durch das Getriebegehäuse 190 von Fig. 1 durch.

Im Betrieb der Handwerkzeugmaschine 100 von Fig. 1 wird gemäß einer Ausführungsform zur Gangumschaltung vom zweiten in den ersten Gang entweder der Handschalter 128 oder der Schiebeschalter 140 in Richtung eines Pfeils 398 gedrückt bzw. verschoben. Hierdurch wird die Ansteuerzunge 402 bzw. die Ansteuerzunge 404 ebenfalls in Richtung des Pfeils 398 verschoben, wodurch eine Verschwenkung des bistabilen Federelements 400 am Lagerelement 180 bewirkt wird. Hierbei wird das bistabile Federelement 400 ausgehend von einer dem zweiten Gang zugeordneten, ersten stabilen Schaltlage in Richtung eines Pfeils 399 zunächst in seine instabile bzw. metastabile Lage überführt, aus der es bei Überschreiten eines zugeordneten Schaltpunkts nach Art eines sogenannten "Knackfroschs" in Richtung des Pfeils 399 in seine dem ersten Gang zugeordnete, zweite stabile Schaltlage springt.

Fig. 4 zeigt das bistabile Federelement 400 von Fig. 1 bis 3 mit dem ringförmigen Grundkörper 401 zur Verdeutlichung der radial auswärts gerichteten Ansteuerzungen 402, 404 sowie der bevorzugt etwa rechtwinklig zu diesen ausgerichteten, radial einwärts gerichteten Mitnehmerzungen 403, 405. Darüber hinaus zeigt Fig. 4 beispielhafte Körperkanten 411, 412, 413, 414 des bistabilen Federelements 400, die bevorzugt als radiale Erweiterungen am ringförmigen Grundkörper 401 ausgebildet sind und bevorzugt zumindest annähernd parallel zu den radial einwärts gerichteten Mitnehmerzungen 403, 405 ausgerichtet sind.

Fig. 5 zeigt das Schalthohlrad 166 und das Lagerelement 180 von Fig.1 bis 3 sowie das bistabile Federelement 400 von Fig. 1 bis 4 zur Illustration einer bevorzugten schwenkbaren Lagerung des Federelements 400 am Lagerelement 180 bzw. im Getriebegehäuse 190 von Fig. 1. Gemäß einer Ausführungsform ist das bistabile Federelement 400 an mindestens zwei und illustrativ an seinen vier Körperkanten 412, 413, 414 (sowie 411 von Fig. 4), die als radiale Erweiterungen am ringförmigen Grundkörper 401 des bistabilen Federelements 400 ausgebildet sind, an den Lagerarmen 282, 284, 286, 288 des Lagerelements 180 gelagert.

Illustrativ sind an den Lagerarmen 282, 284, 286, 288 zugeordnete, bevorzugt V-förmige Lagernuten ausgebildet, in die die bevorzugt ebenen Körperkanten 412, 413, 414 (sowie 411 von Fig. 4) eingreifen. Z. B. greift die Körperkante 412 in eine am Lagerarm 286 vorgesehene Lagernut 586 ein, die Körperkante 413 greift in eine am Lagerarm 282 vorgesehene Lagernut 582 ein und die Körperkante 414 greift in eine am Lagerarm 288 vorgesehene Lagernut 588 ein.

Die Körperkanten 412, 414 bilden beispielhaft eine erste Schwenklagerachse aus, und die Körperkanten 413 (und 411 von Fig. 4) eine zweite Schwenklagerachse, wobei die radial einwärts gerichteten Mitnehmerzungen 405 (und 403 von Fig. 4) bevorzugt im Bereich zwischen diesen beiden Schwenklagerachsen angeordnet sind.

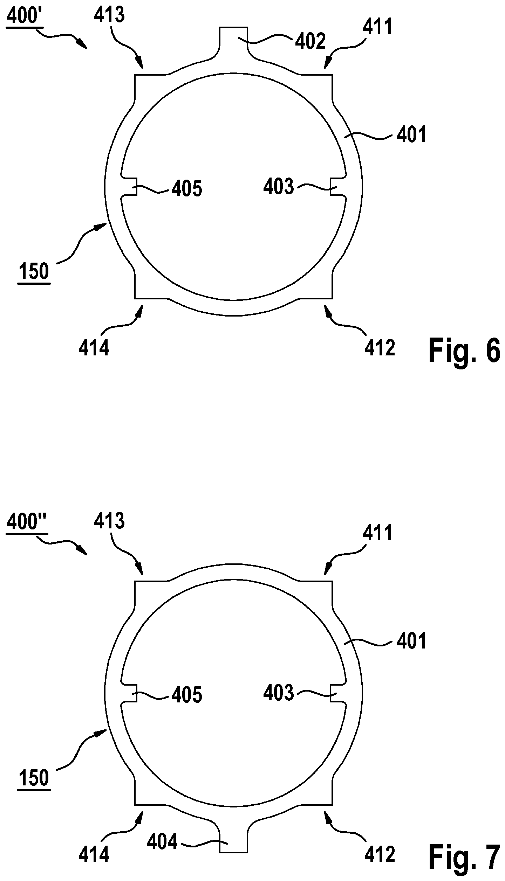

Das bistabile Federelement 400' weist gemäß einer in Fig. 6 gezeigten alternativen Ausführungsform einen ringförmigen Grundkörper 401 auf, der das Schalthohlrad 166 vollständig umgreift und somit im Bereich zwischen dem Schaltglied 166 und dem Getriebegehäuse 190 von Fig. 1 angeordnet ist, wie aus einer Zusammenschau von Fig. 1 und 2 ersichtlich. Das bistabile Federelement 400' gemäß Fig. 6 unterscheidet sich von dem in Fig. 4 gezeigten bistabilen Federelement 400 dadurch, dass nur die ausgehend vom ringförmigen Grundkörper 401 radial auswärts gerichtete Ansteuerzunge 402 vorgesehen ist. Die Ansteuerzunge 402 ist dazu ausgebildet, eine Betätigung des bistabilen Federelements 400' zur Gangumschaltung zumindest über den Schiebeschalter 140 zu ermöglichen.

Das bistabile Federelement 400" weist gemäß einer in Fig. 7 gezeigten alternativen Ausführungsform einen ringförmigen Grundkörper 401 auf, der das Schalthohlrad 166 vollständig umgreift und somit im Bereich zwischen dem Schaltglied 166 und dem Getriebegehäuse 190 von Fig. 1 angeordnet ist, wie aus einer Zusammenschau von Fig. 1 und 2 ersichtlich. Das bistabile Federelement 400" gemäß Fig. 7 unterscheidet sich von dem in Fig. 4 gezeigten bistabilen Federelement 400 dadurch, dass nur die ausgehend vom ringförmigen Grundkörper 401 radial auswärts gerichtete Ansteuerzunge 404 vorgesehen ist. Die Ansteuerzunge 404 ist dazu ausgebildet, eine Betätigung des bistabilen Federelements 400" zur Gangumschaltung zumindest über den Handschalter 128 zu ermöglichen.

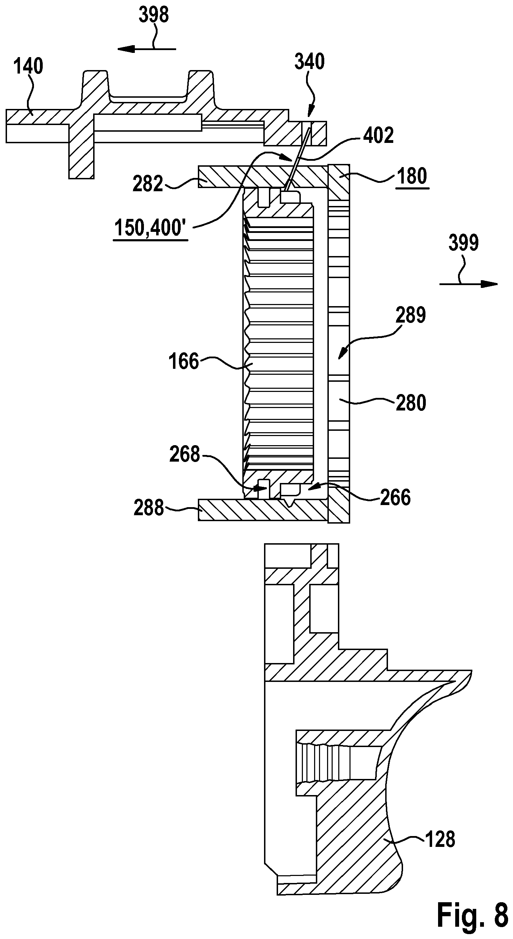

In Analogie zu Fig. 3 zeigt Fig. 8 den Handschalter 128, den Schiebeschalter 140, das Schalthohlrad 166, das Lagerelement 180 und das bistabile Federelement 400' in der alternativen Ausgestaltung nach Fig. 6. Hierbei verdeutlicht Fig. 8 eine beispielhafte Fixierung der Ansteuerzunge 402 des bistabilen Federelements 400' in der nutförmigen Aufnahme 340 des Schiebeschalters 140. Das bistabile Federelement 400' ist dabei nicht mit dem Handschalter 128 gekoppelt. Im Betrieb der Handwerkzeugmaschine 100 von Fig. 1 wird gemäß dieser Ausführungsform zur Gangumschaltung vom zweiten in den ersten Gang der Schiebeschalter 140 in Richtung eines Pfeils 398 gedrückt bzw. verschoben. Hierdurch wird die Ansteuerzunge 402 ebenfalls in Richtung des Pfeils 398 verschoben, wodurch eine Verschwenkung des bistabilen Federelements 400' am Lagerelement 180 bewirkt wird. Hierbei wird das bistabile Federelement 400' ausgehend von einer dem zweiten Gang zugeordneten, ersten stabilen Schaltlage in Richtung eines Pfeils 399 zunächst in seine instabile bzw. metastabile Lage überführt, aus der es bei Überschreiten eines zugeordneten Schaltpunkts nach Art eines sogenannten "Knackfroschs" in Richtung des Pfeils 399 in seine dem ersten Gang zugeordnete, zweite stabile Schaltlage springt.

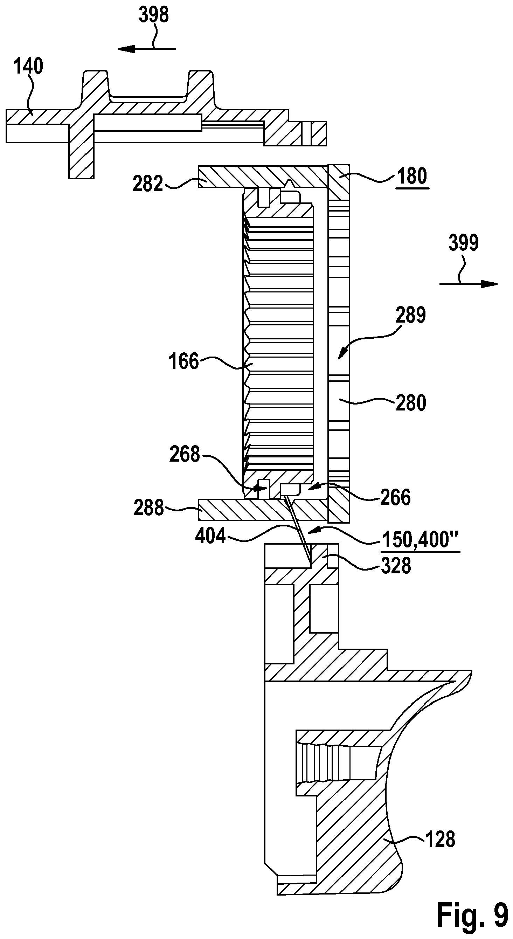

In Analogie zu Fig. 3 zeigt Fig. 9 den Handschalter 128, den Schiebeschalter 140, das Schalthohlrad 166, das Lagerelement 180 und das bistabile Federelement 400" in der alternativen Ausgestaltung nach Fig. 7. Hierbei verdeutlicht Fig. 9 ein beispielhaftes Anliegen der Ansteuerzunge 404 des bistabilen Federelements 400" an dem stegförmigen Ansteuerglied 328 des Handschalters 128. Das bistabile Federelement 400" ist dabei nicht mit dem Schiebeschalters 140 gekoppelt. Im Betrieb der Handwerkzeugmaschine 100 von Fig. 1 wird gemäß dieser Ausführungsform zur Gangumschaltung vom zweiten in den ersten Gang der Handschalter 128 in Richtung eines Pfeils 398 gedrückt bzw. verschoben. Hierdurch wird die Ansteuerzunge 404 ebenfalls in Richtung des Pfeils 398 verschoben, wodurch eine Verschwenkung des bistabilen Federelements 400" am Lagerelement 180 bewirkt wird. Hierbei wird das bistabile Federelement 400" ausgehend von einer dem zweiten Gang zugeordneten, ersten stabilen Schaltlage in Richtung eines Pfeils 399 zunächst in seine instabile bzw. metastabile Lage überführt, aus der es bei Überschreiten eines zugeordneten Schaltpunkts nach Art eines sogenannten "Knackfroschs" in Richtung des Pfeils 399 in seine dem ersten Gang zugeordnete, zweite stabile Schaltlage springt.

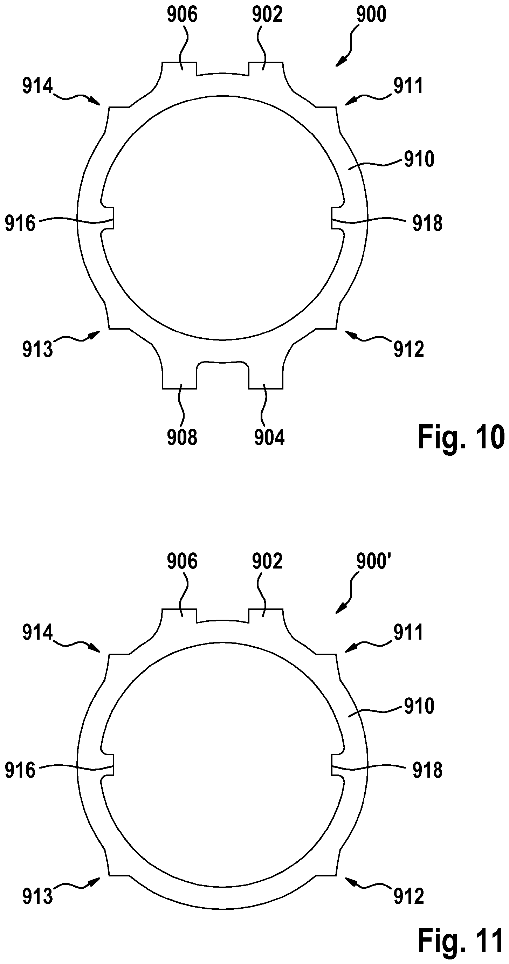

Fig. 10 zeigt eine weitere alternative Ausführungsform des bistabilen Federelements 900. Das bistabile Federelement 900 stellt eine alternative Ausgestaltung zu dem in Fig. 4 gezeigten bistabilen Federelement 400 dar. Dieses bistabile Federelement 900 hat bevorzugt insgesamt vier Ansteuerzungen, die zwei obere Ansteuerzungen 902, 906 sowie zwei untere Ansteuerzungen 904, 908 aufweisen. Diese sind vorzugsweise an einem bevorzugt im Wesentlichen ring- bzw. kreisringförmigen Grundkörper 910 des bistabilen Federelements 900 integral ausgebildet. Der Grundkörper 910 kann auch andere Ausgestaltungen aufweisen und kann z.B. mehreckig ausgebildet sein. Die beiden oberen Ansteuerzungen 902, 906 sowie die beiden unteren Ansteuerzungen 904, 908 sind bevorzugt jeweils paarweise zumindest annähernd diametral gegenüberliegend und radial auswärts gerichtet an dem bevorzugt als Blechstanzteil ausführten Grundkörper 910 integral ausgestaltet. Der Grundkörper 910 ist beispielhalft als ring- bzw. kreisringförmige Blattfeder ausgebildet.

In Analogie zu dem bistabilen Federelement 400 nach Fig. 4 weist das bistabile Federelement 900 bevorzugt in jedem Quadranten des Grundkörpers 910 jeweils eine, und somit illustrativ insgesamt vier, radial auswärts gerichtete Körperkanten 911 bis 914 mit einer jeweils ungefähr dreieckförmigen Außenkontur auf. Mittels der Körperkanten 911 bis 914 ist das Federelement 900 bevorzugt schwenkbar relativ zu einem gehäusefesten Bauteil gelagert. Ebenfalls in Analogie zu dem bistabilen Federelement 400 nach Fig. 4 weist das bistabile Federelement 900 bevorzugt zwei Mitnehmerzungen 916, 918 auf, welche ausgehend von dem Grundkörper 910 radial nach innen gerichtet sind und bevorzugt integral mit dem Grundkörper 910 ausgebildet sind.

Das bistabile Federelement 900' in der alternativen Ausführungsform gemäß Fig. 11 unterscheidet sich von dem in Fig. 10 gezeigten bistabilen Federelement 900 dadurch, dass nur die beiden oberen, ausgehend vom ringförmigen Grundkörper 910 radial auswärts gerichteten Ansteuerzungen 902, 906 vorgesehen sind. Die Ansteuerzungen 902, 906 sind dazu ausgebildet, eine Betätigung des bistabilen Federelements 900' zur Gangumschaltung zumindest über den Schiebeschalter 140 zu ermöglichen.

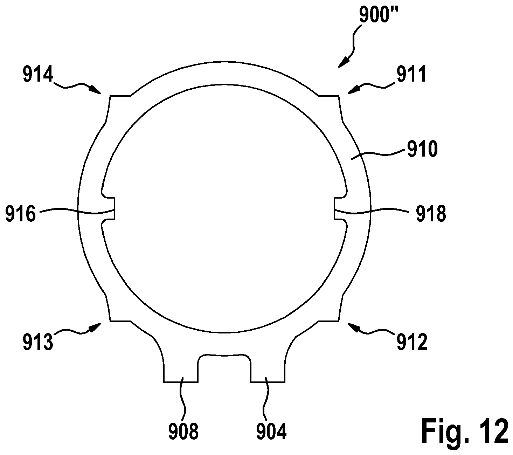

Das bistabile Federelement 900" in der alternativen Ausführungsform gemäß Fig. 12 unterscheidet sich von dem in Fig. 10 gezeigten bistabilen Federelement 900 dadurch, dass nur die beiden unteren, ausgehend vom ringförmigen Grundkörper 910 radial auswärts gerichteten Ansteuerzungen 904, 908 vorgesehen sind. Die Ansteuerzungen 904, 908 sind dazu ausgebildet, eine Betätigung des bistabilen Federelements 900" zur Gangumschaltung zumindest über den Handschalter 128 zu ermöglichen.

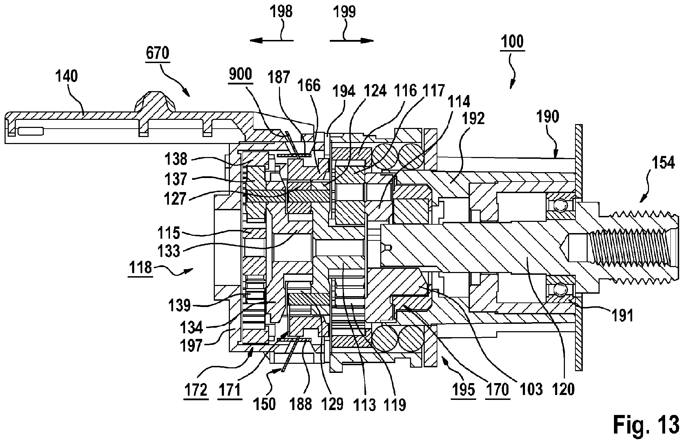

Fig. 13 zeigt einen Ausschnitt der Handwerkzeugmaschine von Fig. 1 mit der Antriebswelle und dem von einem zugeordneten Antriebsmotor angetriebenen Planetengetriebe, das hier beispielhaft gemäß einer alternativen Ausführungsform ausgebildet ist. Wie bei Fig. 1 beschrieben, ist das Planetengetriebe 118 nach Art eines Untersetzungsgetriebes mit mindestens einer schaltbaren Getriebestufe ausgebildet. Illustrativ ist das Planetengetriebe 118 mit den drei in dem Getriebegehäuse 190 angeordneten Planetenstufen ausgebildet, d.h. der vorderen Stufe 170, der mittleren Stufe 171 und der hinteren Stufe 172.

Die vordere Planetenstufe 170 wird bevorzugt von dem Halteblech 194 in dem vorderen Gehäuseabschnitt 192 des Getriebegehäuses 190 fixiert und hat beispielhaft das Sonnenrad 113, mindestens das erste und das zweite Planetenrad 117 und 119, den Planetenträger 114, sowie das axial unbeweglich und in Bohrstellung drehfest im Getriebegehäuse 190 angeordnete Hohlrad 116. Der Planetenträger 114 ist mit dem Antriebsglied 103 der Antriebswelle 120 verbunden, das mit der Antriebswelle 120 z.B. mindestens eine formschlüssige Verbindung ausbildet, wobei das Antriebsglied 103 am Planetenträger 114 auf geeignete Art und Weise befestigt sein kann oder an diesem angeformt bzw. einstückig mit diesem ausgebildet sein kann.

Die mittlere Planetenstufe 171 hat beispielhaft das Sonnenrad 133, mindestens das erste und das zweite Planetenrad 127 und 129, den Planetenträger 124, sowie das gemäß einer Ausführungsform nach Art eines einstückigen Schalthohlrads ausgebildete und nachfolgend auch als "Schalthohlrad" bezeichnete Schaltglied 166. Dieses kann alternativ hierzu auch zweistückig bzw. zweiteilig ausgeführt sein und z.B. ein axial unbewegliches, inneres Hohlrad sowie eine axial bewegliche, äußere Schalthülse aufweisen. Der Planetenträger 124 bildet das Sonnenrad 113 der vorderen Planetenstufe 170 aus, wobei das Sonnenrad 113 am Planetenträger 124 auf geeignete Art und Weise befestigt sein kann oder an diesem angeformt bzw. einstückig mit diesem ausgebildet sein kann.

Die hintere Planetenstufe 172 hat beispielhaft mindestens das erste und das zweite Planetenrad 137 und 139, den Planetenträger 134, sowie das axial unbeweglich und drehfest im Getriebegehäuse 190 angeordnete Hohlrad 138. Die Planetenräder 137, 139 werden im Betrieb der Handwerkzeugmaschine 100 von einem nur schematisch angedeuteten Sonnenrad 115 angetrieben, das z.B. von einem dem Antriebsmotor zugeordneten Ritzel ausgebildet wird. Der Planetenträger 134 bildet das Sonnenrad 133 der mittleren Planetenstufe 171 aus, wobei das Sonnenrad 133 am Planetenträger 134 auf geeignete Art und Weise befestigt sein kann oder an diesem angeformt bzw. einstückig mit diesem ausgebildet sein kann.

Im Betrieb der Handwerkzeugmaschine 100 ist das Schalthohlrad 166 durch eine Betätigung des bistabilen Federelements 900, z.B. mittels des Umschaltelements 140 oder mittels des Handschalters 128, in axialer Richtung des Getriebegehäuses 190 von einer - in Fig. 13 gezeigten - vorderen Schaltposition in Richtung eines Pfeils 198 in eine nicht gezeigte hintere Schaltposition verschiebbar. Hierbei ist bei dem gemäß der alternativen Ausführungsform ausgebildeten Planetengetriebe 118 von Fig. 13, im Gegensatz zu dem gemäß der bei Fig. 1 beschriebenen Ausführungsform ausgebildeten Planetengetriebe 118, die vordere Schaltposition dem zweiten, vergleichsweise schnellen Gang mit niedrigem Drehmoment und die hintere Schaltposition dem ersten, vergleichsweise langsamen Gang mit hohem Drehmoment des Planetengetriebes 118 zugeordnet. Durch eine umgekehrte Verschiebung des Schalthohlrads 166 von seiner hinteren Schaltposition in seine vordere Schaltposition, wie mit einem Pfeil 199 angedeutet, kann das Planetengetriebe 118 dann wieder vom ersten in den zweiten Gang umgeschaltet werden.

In seiner vorderen Schaltposition ist das Schalthohlrad 166 drehfest mit dem Planetenträger 124 der mittleren Planetenstufe 171 verbunden, sodass dieser Planetenträger 124 und die Planetenräder 127, 129 der mittleren Planetenstufe 171 ebenfalls drehfest miteinander verbunden sind. Hierdurch wird die mittlere Planetenstufe 171 deaktiviert, sodass der zweite Gang aktiviert ist. In seiner hinteren Schaltposition ist das Schalthohlrad 166 drehfest mit dem Hohlrad 138 der hinteren Planetenstufe 172 und somit dem Getriebegehäuse 190 verbunden, sodass die mittlere Planetenstufe 171 und somit der erste Gang aktiviert sind. Die Schaltpositionen des Schalthohlrads 166 und damit des schaltbaren Getriebes 118 korrespondieren jeweils mit einer zugeordneten Gangschaltstellung des zweiten, bevorzugt als Schiebeschalter ausgebildeten Umschaltelements 140, der neben seiner vorrangigen Gangumschaltungsfunktion auch mindestens eine Betriebsartenumschaltfunktion aufweisen kann.

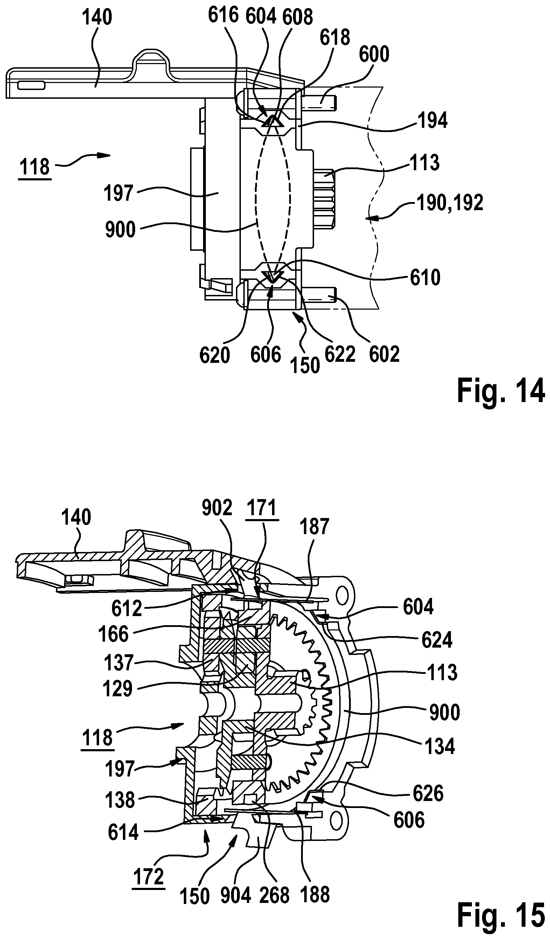

Fig. 14 zeigt den hinteren Gehäuseabschnitt 197 des Planetengetriebes 118 von Fig. 13, in dem das Sonnenrad 113 sowie das als bistabiles Federelement 900 ausgebildete Betätigungselement 150 aufgenommen sind, das wie bei Fig. 6 beschrieben mittels des zweiten, bevorzugt als Schiebeschalter ausgestalteten Umschaltelements 140, sowie des als Gasgebeschalters ausgebildeten Umschaltelements 128 von Fig. 1 ansteuerbar ist. Die Befestigung des Gehäuseabschnitts 197 an dem mit einer punktierten Linie angedeuteten Getriebegehäuse 190 bzw. an dessen vorderem Gehäuseabschnitt 192 erfolgt bevorzugt mit mindestens einem und illustrativ mit Hilfe von vier Befestigungselementen, von denen hier lediglich die Befestigungselemente 600, 602 dargestellt sind. Diese können z.B. als Schraubbolzen, Nieten oder dergleichen ausgeführt sein.

Das bevorzugt in axialer Richtung des Planetengetriebes 118 mechanisch vorgespannte und hierdurch bogenförmige, bistabile Federelement 900 ist gemäß einer Ausführungsform zwischen mindestens zwei und bevorzugt vier, jeweils V-förmigen Lagernuten - von denen hier lediglich die beiden vorderseitigen V-förmigen Lagernuten 604, 606 sichtbar sind - eingespannt. Die Lagernuten 604, 606 durchsetzen bevorzugt den Gehäuseabschnitt 197 des Getriebegehäuses 190 und bilden hierbei vorzugsweise jeweils dreieckförmige, seitliche Öffnungen des hinteren Gehäuseabschnitts 197 aus, von denen hier nur die beiden vorderseitigen Öffnungen 608, 610 sichtbar sind. Die Öffnungen 608, 610 der V-förmigen Lagernuten 604, 606 sind bevorzugt einander zugewandt.

Die Lagernuten 604, 606 bzw. die dreieckförmigen Öffnungen 608, 610 erlauben eine besonders leichtgängige Lagerung und Bewegung des bistabilen Federelements 900 in dessen vorgesehenem Auslenkungsbereich, so dass der Wechsel zwischen den beiden stabilen Zuständen des Federelements 900 flüssig und mit einer dauerhaft reproduzierbaren Betätigungskraft erfolgt. Beide möglichen, stabilen (Schalt-)Zustände bzw. Schaltlagen des bistabilen Federelements 900 sind in der Fig. 14 mit einer jeweils bogenförmigen gestrichelten Linie angedeutet. Hierbei weisen die Lagernuten 604, 606 bzw. die Öffnungen 608, 610 jeweils entgegengesetzt zueinander V-förmig geneigte Wandungen 616, 618 sowie 620, 622 auf, an denen das Federelement 900 in seinen beiden stabilen Schaltlagen abwechselnd zumindest bereichsweise anliegt. Dasselbe gilt für die hier nicht dargestellten (rückseitigen) V-förmigen Lagernuten bzw. dreieckförmigen Öffnungen.

Fig. 15 zeigt den hinteren Gehäuseabschnitt 197 von Fig. 13 und Fig. 14, in dem die hintere Stufe 172 des Planetengetriebes 118 mit dem am Planetenträger 134 angeordneten Planetenrad 137 sowie dem zugehörigen Hohlrad 138 aufgenommen sind. Darüber hinaus sind in den Gehäuseabschnitt 197 die mittlere Stufe 171 des Planetengetriebes 118, mit dem als Schalthohlrad ausgebildeten Schaltglied 166 sowie das zugehörige Planetenrad 129 integriert.

Die Ansteuerzungen 902, 904 durchgreifen vorzugsweise zugeordnete, im hinteren Gehäuseabschnitt 197 aufgenommene Dichtbleche 187, 188 und sind jeweils oberseitig und unterseitig durch Ausnehmungen 612, 614 bzw. Schlitze oder Spalte im Gehäuseabschnitt 197 geführt. Die Ausnehmungen 612, 614 weisen hierbei bevorzugt jeweils eine trapezförmige Querschnittsgeometrie auf, die sich radial auswärts erweitert und deren Wandungen jeweils entgegengesetzt zueinander geneigt sind.

Zur Verschleißreduzierung ist der hintere Gehäuseabschnitt 197 des Planetengetriebes 118 vorzugsweise zumindest bereichsweise mit einem niedrigviskosen Schmiermittel, insbesondere mit Fett, angefüllt. Die Dichtbleche 187, 188 verhindern zum einen den Austritt des Fetts und vereinfachen zudem die Montage des Planetengetriebes 118, da Öffnungsgeometrien der Ausnehmungen 612, 614 aufgrund ihrer späteren Abdeckung mit den Dichtblechen 187, 188 größer bemessen werden können und hierdurch den Einbau des Federelements 900 bzw. den Zusammenbau des Planetengetriebes 118 vereinfachen.

In den beiden gezeigten V-förmigen Lagernuten 604, 606 sowie den beiden anderen verdeckten Lagernuten, ist jeweils bevorzugt ein metallisches Kehlblech 624, 626 angeordnet, um ein Eingraben des Federelements 900 in das Material des hinteren Gehäuseabschnitts 197 zu verhindern. Diese Ausgestaltung erweist sich insbesondere dann als vorteilhaft, wenn der hintere Gehäuseabschnitt 197 des Planetengetriebes 118 zumindest bereichsweise mit einem Kunststoffmaterial gebildet ist. Die Kehlbleche 624, 626, einschließlich der hier nicht dargestellten zwei weiteren Kehlbleche, weisen jeweils eine in etwa V-förmige Querschnittsgeometrie auf, die mit der gleichfalls V-förmigen Querschnittsgeometrie der Lagernuten und ihrer zugehörigen dreieckförmigen Öffnungen korrespondiert.

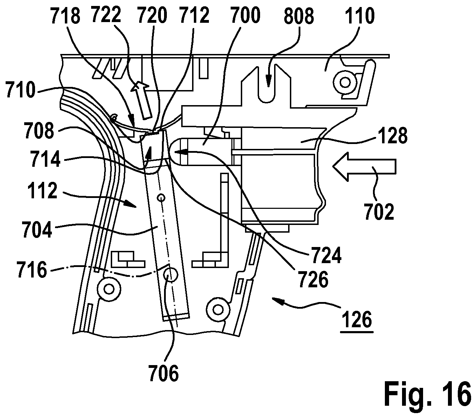

Fig. 16 zeigt einen Ausschnitt des als Handschalter ausgebildeten, ersten Umschaltelements 128 von Fig. 1 gemäß einer Ausführungsform, bei der dieses einen von einer vorderen, in Fig. 16 rechten Betätigungsfläche abgewandten rückseitigen Stößel 700 aufweist. Dieser ist vorzugsweise einstückig zu dem bevorzugt einstückig aus einem Kunststoffmaterial gefertigten Umschaltelement 128 ausgeführt.

Wird das Umschaltelement 128 durch einen Benutzer ausgehend von der hier illustrierten Stellung in Richtung eines Pfeils 702 entgegen der Kraftwirkung einer hier nicht dargestellten Druckfeder eines (elektronischen) Ein-/Aus-Schalters betätigt, so verschwenkt ein in etwa rechteckförmiger Hebel 704, der auf einem im Bereich des Handgriffs 126 des Werkzeuggehäuses 110 an der z.B. hinteren Gehäuseschale 112 ausgebildeten Zapfen 706 verschwenkbar gelagert ist, in einem Winkelbereich von bis zu 20°. Der Zapfen 706 ist bevorzugt senkrecht und integral zum Werkzeuggehäuse 110 bzw. einer Gehäuseschale 112 hiervon ausgeformt.

Der Hebel 704 verfügt an seinem vom Zapfen 706 abgewandten Ende bevorzugt über eine Anlaufkontur 708 mit einem ersten Abschnitt 710, der über eine Abstufung 712 in einen im Vergleich zum ersten Abschnitt 710 kürzeren zweiten Abschnitt 714 übergeht. Die Abschnitte 710, 714 der Anlaufkontur 708 verlaufen hierbei annähernd parallel. Die beiden Abschnitte 710, 714 sowie die Abstufung 712 erstrecken sich über die gesamte Breite des Hebels 704, wobei die Abschnitte 710, 714 annähernd rechtwinklig zu einer Längsmittelachse 716 des Hebels 704 verlaufen und die Abstufung 712 vorzugsweise unter einem geringfügig von 0° abweichenden Winkel zur Längsmittelachse 716 orientiert ist.

Ein ebenfalls in der Gehäuseschale 112 auf geeignete Art und Weise befestigtes Federglied 718 ist hier exemplarisch mit einer bogenförmigen Blattfeder realisiert, in deren Mitte eine bevorzugt zumindest annähernd halbkreisförmige Erhebung 720 ausgeformt ist, die in der gezeigten Position des Hebels 704 mit einer vorzugsweise vergleichsweise geringen mechanischen Vorspannung am ersten Abschnitt 710 sowie seitlich an der Abstufung 712 anliegt. Wird das erste Umschaltelement 128 ausgehend von der hier illustrierten Stellung in Richtung des Pfeils 702 weiter betätigt, so passiert die Abstufung 712 der Anlaufkontur 708 - nach dem Überschreiten einer vordefinierten Betätigungskraft - die Erhebung 720 und drückt hierbei das Federglied 718 in Richtung eines Pfeils 722 bzw. in einer vom Zapfen 706 wegweisenden Richtung hoch, wobei die Erhebung 720 dann weiter auf dem zweiten Abschnitt 714 der Anlaufkontur 708 entlang gleitet. In den Hebel 704 mit einer bevorzugt rechteckförmigen Querschnittsgeometrie ist ferner im Bereich einer Kontaktzone 724 ein Parallelversatz 726 eingeformt, wodurch die Anlaufkontur 708 beim Verschwenken des Hebels 704 in geringem Maße beabstandet zur darunter liegenden Gehäuseschale 112 verläuft. Kurz bevor das bistabile Federelement (vgl. Fig. 13 bis Fig. 15) aus der einen stabilen Schaltlage in die andere stabile Schaltlage wechselt, ermöglicht das Federglied 718, insbesondere zur Erhöhung der Bediensicherheit und des Bedienkomforts, somit eine für den Benutzer haptisch und/oder akustisch eindeutig wahrnehmbare Rückmeldung, wenn das erste Umschaltelement 128 einen festgelegten Weg in Richtung des Pfeils 702 zurückgelegt hat bzw. vom Benutzer hinreichend weit durchgedrückt wurde.

In der Handwerkzeugmaschine 100 nach Fig. 1 und in der alternativen Ausführungsform nach Fig. 13 ist zwecks Vereinfachung der Darstellung das bistabile Federelement 400 nach Fig. 4 bzw. das bistabile Federelement 900 nach Fig. 10 sowohl mit Ansteuerzungen zur Ansteuerung des Federelements durch das erste Umschaltelement, insbesondere den Handschalter 128, als auch mit Ansteuerzungen zur Ansteuerung durch das zweite Umschaltelement, insbesondere den Schiebeschalter 140, dargestellt. Das bistabile Federelement 400 kann alternativ auch in dem schaltbaren Planetengetriebe nach Fig. 13 zum Einsatz kommen, während das bistabile Federelement 900 in der Handwerkzeugmaschine 100 nach Fig. 1 verwendet werden kann. In einer Handwerkzeugmaschine, in der das bistabile Federelement 400" nach Fig. 7 oder das bistabile Federelement 900" nach Fig. 12 verwendet wird, erfolgt die Gangumschaltung ausschließlich über das erste Umschaltelement, den Handschalter 128. In einer derartigen Ausführungsform der Handwerkzeugmaschine 100 ist kein zweites Umschaltelement in Form eines separaten Schiebeschalter 140 zur Gangumschaltung erforderlich. Der Handschalter 128 erfüllt beide Funktionen, nämlich das Ein/Ausschalten bzw. die Gasgebefunktion sowie die Gangumschaltung der Handwerkzeugmaschine 100. In einer Handwerkzeugmaschine, in der das bistabile Federelement 400' nach Fig. 6 oder das bistabile Federelement 900' nach Fig. 11 verwendet wird, erfolgt die Gangumschaltung ausschließlich über das zweite Umschaltelement, den Schiebeschalter 140. In einer derartigen Ausführungsform der Handwerkzeugmaschine 100 dient der Handschalter 128 ausschließlich als Ein/Ausschalter bzw. Gasgebeschalter. Der Handschalter 128 hat dabei keine zusätzliche Funktion als Gangumschaltelement.

## Patentansprüche

1. Handwerkzeugmaschine (100) mit einem schaltbaren Getriebe (118) zum Antrieb einer Antriebswelle (120), das in einem Getriebegehäuse (190) angeordnet ist und über ein Schaltglied (166) mindestens zwischen einem ersten Gang und einem zweiten Gang umschaltbar ist, wobei dem Schaltglied (166) ein schwenkbar gelagertes Betätigungselement (150) zugeordnet ist, das als bistabiles Federelement (400) ausgebildet ist und zumindest abschnittsweise im Bereich zwischen dem Schaltglied (166) und dem Getriebegehäuse (190) angeordnet ist, wobei das bistabile Federelement (400) zur Gangumschaltung betätigbar ist und in mindestens einer Schaltposition des Schaltglieds (166), die dem ersten oder zweiten Gang zugeordnet ist, eine stabile Schaltlage einnimmt, und in einer Zwischenposition des Schaltglieds (166), die zwischen dem ersten und zweiten Gang zugeordneten Schaltpositionen des Schaltglieds (166) angeordnet ist, eine instabile Lage einnimmt, **dadurch gekennzeichnet, dass** ein nach Art eines Lagerblechs ausgebildetes Lagerelement (180) zur schwenkbaren Lagerung des bistabilen Federelements (400) im Getriebegehäuse (190) angeordnet ist, wobei das Lagerelement (180) einen ringförmigen Träger (280) aufweist.

2. Handwerkzeugmaschine nach Anspruch 1, **dadurch gekennzeichnet, dass** das bistabile Federelement (400) einen ringförmigen Grundkörper (401) aufweist, der im Bereich zwischen dem Schaltglied (166) und dem Getriebegehäuse (190) angeordnet ist.

3. Handwerkzeugmaschine nach Anspruch 1 oder 2, **dadurch gekennzeichnet, dass** das bistabile Federelement (400) mindestens zwei radial einwärts gerichtete Mitnehmerzungen (403, 405) aufweist, die mit dem Schaltglied (166) gekoppelt sind und dazu ausgebildet sind, bei einer Betätigung des bistabilen Federelements (400) zur Gangumschaltung das Schaltglied (166) in eine jeweils dem ersten oder zweiten Gang zugeordnete Schaltposition zu verfahren.

4. Handwerkzeugmaschine nach einem der vorhergehenden Ansprüche, **dadurch gekennzeichnet, dass** das bistabile Federelement (400) mindestens zwei radial auswärts gerichtete Ansteuerzungen (402, 404) aufweist, die dazu ausgebildet sind, eine Betätigung des bistabilen Federelements (400) zur Gangumschaltung über mindestens ein erstes oder ein zweites Umschaltelement (128, 140) zu ermöglichen.

5. Handwerkzeugmaschine nach Anspruch 4, **dadurch gekennzeichnet, dass** das bistabile Federelement (900) mindestens vier radial auswärts gerichtete Ansteuerzungen (902, 906; 904, 908) aufweist, die dazu ausgebildet sind, eine Betätigung des bistabilen Federelements (900) zur Gangumschaltung über mindestens ein erstes oder ein zweites Umschaltelement (128, 140) zu ermöglichen.

6. Handwerkzeugmaschine nach einem der Ansprüche 4 oder 5, **dadurch gekennzeichnet, dass** das erste Umschaltelement (128) dazu vorgesehen ist, eine Gasgebefunktion auszubilden, und dass das zweite Umschaltelement (140) dazu vorgesehen ist, eine Gangumschaltfunktion auszubilden.

7. Handwerkzeugmaschine nach einem der Ansprüche 1 bis 3, **dadurch gekennzeichnet, dass** das bistabile Federelement (400') mindestens eine radial auswärts gerichtete Ansteuerzunge (402) aufweist, die dazu ausgebildet ist, eine Betätigung des bistabilen Federelements (400') zur Gangumschaltung über mindestens ein Umschaltelement (140) zu ermöglichen, wobei das Umschaltelement (140) als Gangwahlschaltelement ausgebildet ist.

8. Handwerkzeugmaschine nach Anspruch 7, **dadurch gekennzeichnet, dass** das das bistabile Federelement (900') mindestens zwei radial auswärts gerichtete Ansteuerzunge (902, 906) aufweist, die dazu ausgebildet sind, eine Betätigung des bistabilen Federelements (900') zur Gangumschaltung über mindestens ein Umschaltelement (140) zu ermöglichen, wobei das Umschaltelement (140) als Gangwahlschaltelement ausgebildet ist.

9. Handwerkzeugmaschine nach einem der Ansprüche 1 bis 3, **dadurch gekennzeichnet, dass** das bistabile Federelement (400") mindestens eine radial auswärts gerichtete Ansteuerzunge (404) aufweist, die dazu ausgebildet ist, eine Betätigung des bistabilen Federelements (400") zur Gangumschaltung über mindestens ein Umschaltelement (128) zu ermöglichen, wobei das Umschaltelement (128) als Handschalter ausgebildet ist.

10. Handwerkzeugmaschine nach Anspruch 9, **dadurch gekennzeichnet, dass** das das bistabile Federelement (900") mindestens zwei radial auswärts gerichtete Ansteuerzunge (904, 908) aufweist, die dazu ausgebildet sind, eine Betätigung des bistabilen Federelements (900") zur Gangumschaltung über mindestens ein Umschaltelement (128) zu ermöglichen, wobei das Umschaltelement (128) als Handschalter ausgebildet ist.

11. Handwerkzeugmaschine nach einem der vorhergehenden Ansprüche, **dadurch gekennzeichnet, dass** das bistabile Federelement (400) an mindestens zwei Körperkanten (411, 412, 413, 414) schwenkbar im Getriebegehäuse (190) gelagert ist.

12. Handwerkzeugmaschine nach Anspruch 11, **dadurch gekennzeichnet, dass** die mindestens zwei Körperkanten (411, 412, 413, 414) als radiale Erweiterungen am ringförmigen Grundkörper (401) des bistabilen Federelements (400) ausgebildet sind.

13. Handwerkzeugmaschine nach einem der vorhergehenden Ansprüche, **dadurch gekennzeichnet, dass** an dem Lagerelement (180) mindestens zwei axiale Lagerarme (282, 284, 286, 288) zur schwenkbaren Lagerung des bistabilen Federelements (400) ausgebildet sind.

14. Handwerkzeugmaschine nach einem der vorhergehenden Ansprüche, **dadurch gekennzeichnet, dass** das schaltbare Getriebe (118) nach Art eines Planetengetriebes mit mindestens einer Planetenstufe (170, 171, 172) ausgebildet ist, wobei das Schaltglied (166) nach Art eines Schalthohlrads ausgebildet ist.

15. Handwerkzeugmaschine nach einem der vorhergehenden Ansprüche, **dadurch gekennzeichnet, dass** in einer Schaltposition das Schaltglied (166) drehfest mit dem Lagerelement (180) verbunden ist.

## Claims

1. Portable power tool (100) having a shiftable transmission (118) for driving a drive shaft (120), said transmission (118) being arranged in a transmission housing (190) and being shiftable at least between a first gear and a second gear via a shift member (166), wherein the shift member (166) is assigned a pivotably mounted actuating element (150) which is configured as a bistable spring element (400) and is arranged at least partially in the region between the shift member (166) and the transmission housing (190), wherein the bistable spring element (400) is actuable to shift gears and has a stable shift setting in at least one shifting position of the shift member (166), said shifting position being assigned to the first or second gear, and has an unstable setting in an intermediate position of the shift member (166), said intermediate position being arranged between shifting positions, assigned to the first and second gears, of the shift member (166), **characterized in that** a bearing element (180), configured in the form of a bearing plate, for mounting the bistable spring element (400) in a pivotable manner is arranged in the transmission housing (190), wherein the bearing element (180) has an annular carrier (280).

2. Portable power tool according to Claim 1, **characterized in that** the bistable spring element (400) has an annular main body (401) which is arranged in the region between the shift member (166) and the transmission housing (190).

3. Portable power tool according to Claim 1 or 2, **characterized in that** the bistable spring element (400) has at least two radially inwardly directed driver tongues (403, 405) which are coupled to the shift member (166) and are configured, upon actuation of the bistable spring element (400) for changing gears, to move the shift member (166) into a shifting position assigned in each case to the first or second gear.

4. Portable power tool according to one of the preceding claims, **characterized in that** the bistable spring element (400) has at least two radially outwardly directed control tongues (402, 404) which are configured to allow actuation of the bistable spring element (400) for changing gears via at least a first or a second shifting element (128, 140).

5. Portable power tool according to Claim 4, **characterized in that** the bistable spring element (900) has at least four radially outwardly directed control tongues (902, 906; 904, 908) which are configured to allow actuation of the bistable spring element (900) for shifting gears via at least a first or a second shifting element (128, 140).

6. Portable power tool according to either of Claims 4 and 5, **characterized in that** the first shifting element (128) is intended to form an acceleration function, and **in that** the second shifting element (140) is intended to form a gear shifting function.

7. Portable power tool according to one of Claims 1 to 3, **characterized in that** the bistable spring element (400') has at least one radially outwardly directed control tongue (402) which is configured to allow actuation of the bistable spring element (400') for shifting gears via at least one shifting element (140), wherein the shifting element (140) is configured as a gear selection shift element.

8. Portable power tool according to Claim 7, **characterized in that** the bistable spring element (900') has at least two radially outwardly directed control tongues (902, 906) which are configured to allow actuation of the bistable spring element (900') for shifting gears via at least one shifting element (140), wherein the shifting element (140) is configured as a gear selection shift element.

9. Portable power tool according to one of Claims 1 to 3, **characterized in that** the bistable spring element (400") has at least one radially outwardly directed control tongue (404) which is configured to allow actuation of the bistable spring element (400") for shifting gears via at least one shifting element (128), wherein the shifting element (128) is configured as a manual switch.

10. Portable power tool according to Claim 9, **characterized in that** the bistable spring element (900") has at least two radially outwardly directed control tongues (904, 908) which are configured to allow actuation of the bistable spring element (900") for shifting gears via at least one shifting element (128), wherein the shifting element (128) is configured as a manual switch.

11. Portable power tool according to one of the preceding claims, **characterized in that** the bistable spring element (400) is mounted in the transmission housing (190) in a pivotable manner at at least two body edges (411, 412, 413, 414).

12. Portable power tool according to Claim 11, **characterized in that** the at least two body edges (411, 412, 413, 414) are configured as radial extensions on the annular main body (401) of the bistable spring element (400).

13. Portable power tool according to one of the preceding claims, **characterized in that** at least two axial bearing arms (282, 284, 286, 288) for mounting the bistable spring element (400) in a pivotable manner are formed on the bearing element (180).

14. Portable power tool according to one of the preceding claims, **characterized in that** the shiftable transmission (118) is configured in the manner of a planetary transmission having at least one planetary stage (170, 171, 172), wherein the shift member (166) is configured in the manner of a shifting annulus.

15. Portable power tool according to one of the preceding claims, **characterized in that**, in a shifting position, the shift member (166) is connected to the bearing element (180) in a rotationally fixed manner.

## Revendications

1. Machine-outil à main (100) comprenant une boîte de vitesses (118) pour l'entraînement d'un arbre d'entraînement (120) qui est disposée dans un boîtier de transmission (190) et qui peut être commutée par le biais d'un organe de commutation (166) au moins entre une première vitesse et une deuxième vitesse, à l'organe de commutation (166) étant associé un élément d'actionnement (150) supporté de manière pivotante qui est réalisé sous forme d'élément de ressort bistable (400) et qui est disposé au moins en partie dans la région entre l'organe de commutation (166) et le boîtier de transmission (190), l'élément de ressort bistable (400) pouvant être actionné pour changer de vitesse et adoptant une position de commutation stable dans au moins une position de commutation de l'organe de commutation (166) qui est associée à la première ou à la deuxième vitesse, et adoptant une position instable dans une position intermédiaire de l'organe de commutation (166), qui est disposée entre des positions de commutation de l'organe de commutation (166) associées à la première et à la deuxième vitesse, **caractérisée en ce qu'**un élément de palier (180) réalisé à la manière d'une tôle de palier est prévu pour le support pivotant de l'élément de ressort bistable (400) dans le boîtier de transmission (190), l'élément de palier (180) présentant un support annulaire (280).

2. Machine-outil à main selon la revendication 1, **caractérisée en ce que** l'élément de ressort bistable (400) présente un corps de base annulaire (401) qui est disposé dans la région entre l'organe de commutation (166) et le boîtier de transmission (190).

3. Machine-outil à main selon la revendication 1 ou 2, **caractérisée en ce que** l'élément de ressort bistable (400) présente au moins deux langues d'entraînement (403, 405) orientées radialement vers l'intérieur, qui sont accouplées à l'organe de commutation (166) et qui sont réalisées pour déplacer l'organe de commutation (166) dans une position de commutation associée respectivement à la première ou à la deuxième vitesse lors d'un actionnement de l'élément de ressort bistable (400) en vue du changement de vitesses.

4. Machine-outil à main selon l'une quelconque des revendications précédentes, **caractérisée en ce que** l'élément de ressort bistable (400) présente au moins deux langues de commande (402, 404) orientées radialement vers l'extérieur, qui sont réalisées de manière à permettre l'actionnement de l'élément de ressort bistable (400) en vue du changement de vitesses par le biais d'au moins un premier ou d'un deuxième élément de commutation (128, 140).

5. Machine-outil à main selon la revendication 4, **caractérisée en ce que** l'élément de ressort bistable (900) présente au moins quatre langues de commande (902, 906 ; 904, 908) orientées radialement vers l'extérieur, qui sont réalisées de manière à permettre un actionnement de l'élément de ressort bistable (900) en vue d'un changement de vitesses par le biais d'au moins un premier ou un deuxième élément de commutation (128, 140).

6. Machine-outil à main selon l'une quelconque des revendications 4 ou 5, **caractérisée en ce que** le premier élément de commutation (128) est prévu pour effectuer une fonction d'accélération et **en ce que** le deuxième élément de commutation (140) est prévu pour réaliser une fonction de changement de vitesses.

7. Machine-outil à main selon l'une quelconque des revendications 1 à 3, **caractérisée en ce que** l'élément de ressort bistable (400') présente au moins une langue de commande (402) orientée radialement vers l'extérieur qui est réalisée de manière à permettre l'actionnement de l'élément de ressort bistable (400') en vue d'un changement de vitesses par le biais d'au moins un élément de commutation (140), l'élément de commutation (140) étant réalisé sous forme d'élément sélecteur de vitesses.

8. Machine-outil à main selon la revendication 7, **caractérisée en ce que** l'élément de ressort bistable (900') présente au moins deux langues de commande orientées radialement vers l'extérieur (902, 906) qui sont réalisées de manière à permettre un actionnement de l'élément de ressort bistable (900') en vue d'un changement de vitesses par le biais d'au moins un élément de commutation (140), l'élément de commutation (140) étant réalisé sous forme d'élément sélecteur de vitesses.

9. Machine-outil à main selon l'une quelconque des revendications 1 à 3, **caractérisée en ce que** l'élément de ressort bistable (400'') présente au moins une langue de commande (404) orientée radialement vers l'extérieur, qui est réalisée de manière à permettre un actionnement de l'élément de ressort bistable (400'') en vue d'un changement de vitesses par le biais d'au moins un élément de commutation (128), l'élément de commutation (128) étant réalisé sous forme de commutateur manuel.

10. Machine-outil à main selon la revendication 9, **caractérisée en ce que** l'élément de ressort bistable (900'') présente au moins deux langues de commande orientées radialement vers l'extérieur (904, 908) qui sont réalisées de manière à permettre un actionnement de l'élément de ressort bistable (900'') en vue d'un changement de vitesses par le biais d'au moins un élément de commutation (128), l'élément de commutation (128) étant réalisé sous forme de commutateur manuel.

11. Machine-outil à main selon l'une quelconque des revendications précédentes, **caractérisée en ce que** l'élément de ressort bistable (400) est supporté de manière pivotante dans le boîtier de transmission (190) au niveau d'au moins deux arêtes de corps (411, 412, 413, 414).

12. Machine-outil à main selon la revendication 11, **caractérisée en ce que** les au moins deux arêtes de corps (411, 412, 413, 414) sont réalisées sous forme d'élargissements radiaux au niveau du corps de base annulaire (401) de l'élément de ressort bistable (400).

13. Machine-outil à main selon l'une quelconque des revendications précédentes, **caractérisée en ce qu'**au moins deux bras de paliers axiaux (282, 284, 286, 288) sont réalisés au niveau de l'élément de palier (180) pour le support sur palier pivotant de l'élément de ressort bistable (400).

14. Machine-outil à main selon l'une quelconque des revendications précédentes, **caractérisée en ce que** la boîte de vitesses (118) est réalisée à la manière d'un engrenage planétaire avec au moins un étage planétaire (170, 171, 172), l'organe de commutation (166) étant réalisé à la manière d'une couronne de commutation.

15. Machine-outil à main selon l'une quelconque des revendications précédentes, **caractérisée en ce que** dans une position de commutation, l'organe de commutation (166) est connecté de manière solidaire en rotation à l'élément de palier (180).
